# EUROPEAN PATENT APPLICATION

(11) **EP 2 079 200 A1**
(43) Date of publication of application: **15.07.2009**
(21) Application number: 07830841.8
(22) Date of filing: 30.10.2007
(51) Int. Cl.: H04L 12/56, H04Q 7/38

(54) **PACKET TRANSFER CONTROL METHOD, MOBILE TERMINAL AND HOME AGENT USED IN ITS METHOD**

(30) Priority: 01.11.2006 JP 2006298244
(71) Applicant: Panasonic Corporation, Kadoma-shi Osaka 571-8501 (JP)
(72) Inventor: ASO, Keigo c/o Panasonic Corporation, IPROC, 2-1-61, Shiromi, Chuo-ku, Osaka 540-6207 (JP); HIRANO, Jun c/o Panasonic Corporation, IPROC, Shiromi, Chuo-ku, Osaka-shi, Osaka 540-6207 (JP)
(74) Representative: Grünecker, Kinkeldey, Stockmair & Schwanhäusser Anwaltssozietät
(86) International application number: PCT/JP2007/071107
(87) International publication number: WO 2008/053882

(57) **Abstract**

A technology is disclosed for providing a packet transfer control method that can transmit a DU message to a specific CN or a specific flow to prompt a change in destination, while maintaining a transfer request to a CoA from a HA. In the technology, when a home agent receives a packet addressed to a mobile terminal from a predetermined communication terminal, the mobile terminal transmits a second message to the home agent, the second message including information required for the home agent to transmit a first message to the predetermined communication terminal. The first message states that a currently used address addressed to the mobile terminal cannot be used. The home agent generates the first message based on the information included in the second message and transmits the generated first message to the predetermined communication terminal.

## Description

### TECHNICAL FIELD

The present invention relates to a packet transfer control method, and a mobile terminal and a home agent used in the method, when a MN using mobile internet protocol (MIP) communicates with a correspondent node via a home agent.

### BACKGROUND ART

When a plurality of home agents (HA), such as a HA 1 and a HA 2, are assigned to a MN that uses mobile IP, a plurality of home addresses (HoA), such as a HoA 1 and a HoA 2, that are managed by respective HA are assigned to the MN (mobile node). The HoA held by the MN is an address recognized by a correspondent node (CN) as a global address of the MN. When a route optimization method prescribed by mobile IP is not used, the HoA is used in communication between the CN and the MN. In this case, a tunnel is formed between each HA and the MN. In actuality, through encapsulation using a care of address (CoA), a packet that is transmitted and received using the HoA 1 is transferred via the HA 1. A packet that is transmitted and received using the HoA 2 is transferred via the HA 2.

A method by which the MN registers a plurality of CoA to the HA is described in Non-patent Document 1, below. A method by which the MN registers flow information to the HA to allow the HA to judge which CoA to use among the plurality of registered CoA is described in Non-patent Document 2, below. The MN registers the HoA 2 as the CoA of the HoA 1, and furthermore, registers appropriate flow information. As a result, a packet transmitted from an arbitrary CN to the HoA 1 can be transferred to the HoA 2. Fig. 25 is a diagram of a packet transfer route from a CN 2500 when the HoA 2 is registered to the HA 1 as the CoA of the HoA 1. A route 1 is a transfer route used when a CoA 1 is used as a transfer destination. A route 2 is a transfer route used when the HoA 2 is used as a transfer destination. As a result, when a quality of service (QoS) path is secured between a HA and the MN for communication with a specific CN, communication from an arbitrary CN can be switched to be performed by way of the HA 2 so as not to affect the state of the QoS path.
Non-patent Document 1: R. Wakikawa, T. Ernst, K. Nagami, "Multiple Care-of Addresses Registration," draft-ietf-monami6-mupitilecoa-00.txt, June 2006
Non-patent Document 2: H. Soliman, N. Montavont, N. Fikouras, K. Kuladinithi, "Flow Bindings in Mobile IPv6," draft-soliman-monami6-flow-binding-01.txt, June 2006

However, the CN 2500 that is a source of the packet to be transferred to the HoA 2 by the HA 1 constantly continues to transmit to the HoA 1. Therefore, the packet is transmitted via both HA, the HA 1 and the HA 2. A transfer path to a MN 2501 becomes long. Therefore, a delay in communication occurs between the MN 2501 and the CN 2500. To prevent this delay, the source CN 2500 is required to use the HoA 2 instead of the HoA 1. Ordinarily, when the CN receives destination unreachable (DU) message of an internet control message protocol (ICMP) in response to a packet transmitted by the CN itself, the CN judges that the transmitted packet has not reached a destination node. The CN attempts to retransmit the packet, change the destination address, or the like.

To return a DU message to the CN 2500 to prompt a change the address, a situation is required to be created in which the packet addressed to the HoA 1 does not reach the MN 2501. As a method of creating the situation, all binding cache entries registered to the HA 1 can be deleted. When this method is used, the packet transmitted to the HoA 1 is no longer received by the HA 1 as proxy. Therefore, a recipient is absent. The DU message is returned to the CN 2500 that is the source. However, because all binding cache entries are required to be deleted, communication with other CN using the HoA 1 is also suspended.

### DISCLOSURE OF THE INVENTION

The present invention has been achieved in light of the above-described issues. An object of the present invention is to provide a packet transfer control method in which a DU message can be transmitted to a specific CN or a specific flow to prompt a change in destination, while maintaining a transfer request to a CoA from a HA.

To achieve the above-described object, the present invention provides a packet transfer control method in a communication system in which a mobile terminal performs packet communication with a plurality of communication terminals that are communication partners of the mobile terminal, via a home agent of the mobile terminal. The packet transfer method includes a step at which, when the home agent receives a packet addressed to the mobile terminal from a predetermined communication terminal, the mobile terminal transmits a second message to the home agent, the second message including information required for the home agent to transmit a first message to the predetermined communication terminal. The first message states that a currently used address addressed to the mobile terminal cannot be used. The packet transfer control method also includes a step at which the home agent generates the first message based on the information included in the second message and transmits the generated first message to the predetermined communication terminal. As a result of the configuration, a DU message can be transmitted to a specific CN (predetermined communication terminal [predetermined correspondent node]) or a specific flow to prompt a change in destination, while maintaining a transfer request to a CoA from a HA. The first message is equivalent to a DU message described hereafter. The second message is equivalent to a flow information registration message.

In addition, in the packet transfer control method of the present invention, a preferred aspect of the present invention is that, when a plurality of home agents of the mobile terminal are present, when a predetermined home agent receives the packet addressed to the mobile terminal from the predetermined communication terminal, the mobile terminal transmits a second message to the predetermined home agent, the second message including information required for the predetermined home agent to transmit a first message to the predetermined communication terminal. The first message states that a currently used address addressed to the mobile terminal cannot be used. The predetermined home agent generates the first message based on the information included in the second message, and transmits the generated first message to the predetermined communication terminal. As a result of the configuration, a DU message can be transmitted to a specific CN or a specific flow to prompt a change in destination, while maintaining a transfer request to a CoA from a HA, even when the mobile terminal can use a plurality of home agents.

In addition, in the packet transfer control method of the present invention, a preferred aspect of the present invention is that the mobile terminal further includes, in the second message, information indicating an instruction to switch the currently used address addressed to the mobile terminal. As a result of the configuration, the CN can be made to immediately recognize that the CN should change the destination address, rather than re-transmitting the packet or the like.

In addition, in the packet transfer control method of the present invention, a preferred aspect of the present invention is that the mobile terminal further includes, in the second message, information on an address to which the currently used address addressed to the mobile terminal is switched. As a result of the configuration, the CN can be made to immediately recognize that the CN should change the destination address, rather than re-transmitting the packet or the like.

In addition, in the packet transfer control method of the present invention, a preferred aspect of the present invention is that the mobile terminal further includes, in the second message, information used to instruct performance of route optimization. As a result of the configuration, the CN can be made to immediately recognize that the CN should use route optimization, rather than re-transmitting the packet or the like. Alternatively, the CN can be made to immediately recognize that a request is required to be made to the MN to register binding information.

In addition, in the packet transfer control method of the present invention, a preferred aspect of the present invention is that the mobile terminal further includes, in the second message, information used when route optimization is performed. As a result of the configuration, the CN can be made to immediately switch to packet transmission using route optimization, rather than re-transmitting the packet or the like.

The present invention provides a mobile terminal used in a packet transfer control method in a communication system in which the mobile terminal performs packet communication with a plurality of communication terminals that are communication partners of the mobile terminal, via a home agent of the mobile terminal. The mobile terminal includes a message generating means for generating a second message, when the home agent receives a packet addressed to the mobile terminal from a predetermined communication terminal, the second message including information required for the home agent to transmit a first message to the predetermined communication terminal. The first message states that a currently used address addressed to the mobile terminal cannot be used. The mobile terminal also includes a transmitting means for transmitting the generated second message to the home agent. As a result of the configuration, a DU message can be transmitted to a specific CN (predetermined communication terminal [predetermined correspondent node]) or a specific flow to prompt a change in destination, while maintaining a transfer request to a CoA from a HA.

In addition, in the mobile terminal of the present invention, a preferred aspect of the present invention is that, when a plurality of home agents of the mobile terminal are present, when a predetermined home agent receives the packet addressed to the mobile terminal from the predetermined communication terminal, the message generating means generates a second message, the second message including information required for the predetermined home agent to transmit a first message to the predetermined communication terminal. The first message states that a currently used address addressed to the mobile terminal cannot be used. The transmitting means transmits the generated second message to the predetermined home agent. As a result of the configuration, a DU message can be transmitted to a specific CN or a specific flow to prompt a change in destination, while maintaining a transfer request to a CoA from a HA, even when the mobile terminal can use a plurality of home agents.

In addition, in the mobile terminal of the present invention, a preferred aspect of the present invention is that the message generating means further includes, in the second message, information indicating an instruction to switch the currently used address addressed to the mobile terminal. As a result of the configuration, the CN can be made to immediately recognize that the CN should change the destination address, rather than re-transmitting the packet or the like.

In addition, in the mobile terminal of the present invention, a preferred aspect of the present invention is that the message generating means further includes, in the second message, information on an address to which the currently used address addressed to the mobile terminal is switched. As a result of the configuration, the CN can be made to immediately recognize that the CN should change the destination address, rather than re-transmitting the packet or the like.

In addition, in the mobile terminal of the present invention, a preferred aspect of the present invention is that the message generating means further includes, in the second message, information used to instruct performance of route optimization. As a result of the configuration, the CN can be made to immediately recognize that the CN should use route optimization, rather than re-transmitting the packet or the like. Alternatively, the CN can be made to immediately recognize that a request is required to be made to the MN to register binding information.

In addition, in the mobile terminal of the present invention, a preferred aspect of the present invention is that the message generating means further includes, in the second message, information used when route optimization is performed. As a result of the configuration, the CN can be made to immediately switch to packet transmission using route optimization, rather than re-transmitting the packet or the like.

The present invention provides a home agent used in a packet transfer control method in a communication system in which a mobile terminal performs packet communication with a plurality of communication terminals that are communication partners of the mobile terminal, via the home agent of the mobile terminal. The home agent includes a receiving means for receiving a second message from the mobile terminal, when a packet addressed to the mobile terminal is received from a predetermined communication terminal. The second message including information required for the home agent to transmit a first message, the first message stating that a currently used address addressed to the mobile terminal cannot be used. The home agent also includes a message generating means for generating the first message based on the information included in the received second message. The home agent also includes a transmitting means for transmitting the generated first message to the predetermined communication terminal. As a result of the configuration, a DU message can be transmitted to a specific CN (predetermined communication terminal [predetermined correspondent node]) or a specific flow to prompt a change in destination, while maintaining a transfer request to a CoA from a HA.

In addition, in the home agent of the present invention, a preferred aspect of the present invention is that, when a plurality of home agents of the mobile terminal are present, the second message further includes information indicating an instruction to switch the currently used address addressed to the mobile terminal. As a result of the configuration, the CN can be made to immediately recognize that the CN should change the destination address, rather than re-transmitting the packet or the like.

In addition, in the home agent of the present invention, a preferred aspect of the present invention is that, when a plurality of home agents of the mobile terminal are present, the second message further includes information on an address to which the currently used address addressed to the mobile terminal is switched. As a result of the configuration, the CN can be made to immediately recognize that the CN should change the destination address, rather than re-transmitting the packet or the like.

In addition, in the home agent of the present invention, a preferred aspect of the present invention is that the second message further includes information used to instruct performance of route optimization. As a result of the configuration, the CN can be made to immediately recognize that the CN should use route optimization, rather than re-transmitting the packet or the like. Alternatively, the CN can be made to immediately recognize that a request is required to be made to the MN to register binding information.

In addition, in the home agent of the present invention, a preferred aspect of the present invention is that the second message further includes information used when route optimization is performed. As a result of the configuration, the CN can be made to immediately switch to packet transmission using route optimization, rather than re-transmitting the packet or the like.

The packet transfer control method, and the mobile terminal and the home agent used in the method are configured as described above. The DU message can be transmitted to a specific MN or a specific flow to prompt a change in destination, while maintaining a transfer request to a CoA from a HA.

### BRIEF DESCRIPTION OF THE DRAWINGS

Fig. 1 is a block diagram of an example of a network configuration according to first, second, and third embodiments of the present invention;
Fig. 2 is a block diagram of an example of a configuration of a MN according to the first and third embodiments of the present invention;
Fig. 3 is a diagram of an example of a format of a flow information registration message when a DU message transmission request is specified according to the first embodiment of the present invention;
Fig. 4 is a diagram of an example of a format of a flow information registration message using a mobility header when the DU message transmission request is specified according to the first embodiment of the present invention;
Fig. 5 is a diagram of an example of a format of a flow information response message according to the first embodiment of the present invention;
Fig. 6 is a diagram of an example of a format of a flow information response message when a mobility header is used according to the first embodiment of the present invention;
Fig. 7 is a block diagram of an example of a configuration of a HA according to the first, second, and third embodiments of the present invention;
Fig. 8 is a diagram of an example of flow information held by a flow information holding unit according to the first embodiment of the present invention;
Fig. 9 is a block diagram of an example of a configuration of a MN according to the second embodiment of the present invention;
Fig. 10 is a diagram of an example of a format of a flow information registration message when transmission of a DU message including a "New Code" is specified according to the second embodiment of the present invention;
Fig. 11 is a diagram of an example of a format of a flow information registration message using a mobility header when transmission of the DU message including the "New Code" is specified according to the second embodiment of the present invention;
Fig. 12 is a diagram of an example of a format of a flow information response message according to the second embodiment of the present invention;
Fig. 13 is a diagram of an example of a format of a flow information response message when a mobility header is used according to the second embodiment of the present invention;
Fig. 14 is a diagram of an example of a format of the DU message including the "New Code" according to the second embodiment of the present invention;
Fig. 15 is a block diagram of an example of a configuration of a CN according to the second and third embodiments of the present invention;
Fig. 16 is a diagram of an example of a format of a flow information registration message for switch-to address notification when DU message transmission is specified according to the third embodiment of the present invention, the DU message including a "New Code" indicating switching of a destination address and an address to which the destination address is switched;
Fig. 17 is a diagram of an example of a format of a flow information registration message for switch-to address notification using a mobility header, when DU message transmission is specified according to the third embodiment of the present invention, the DU message including the "New Code" indicating switching of the destination address and the address to which the destination address is switched;
Fig. 18 is a diagram of an example of a format of a flow information response message according to the third embodiment of the present invention;
Fig. 19 is a diagram of an example of a format of a flow information response message when a mobility header is used according to the third embodiment of the present invention;
Fig. 20 is a diagram of an example of a format of the DU message including the "New Code" according to the third embodiment of the present invention;
Fig. 21 is a diagram of an example of a network configuration according to fourth, fifth, and sixth embodiments of the present invention;
Fig. 22 is a diagram of an example of a configuration of a MN according to the fourth, fifth, and sixth embodiments of the present invention;
Fig. 23 is a diagram of an example of a configuration of a CN according to the fifth and sixth embodiments of the present invention;
Fig. 24 is a diagram of an example of a format of a message generated by an ICMP DU message generating unit of a HA according to the sixth embodiment of the present invention; and

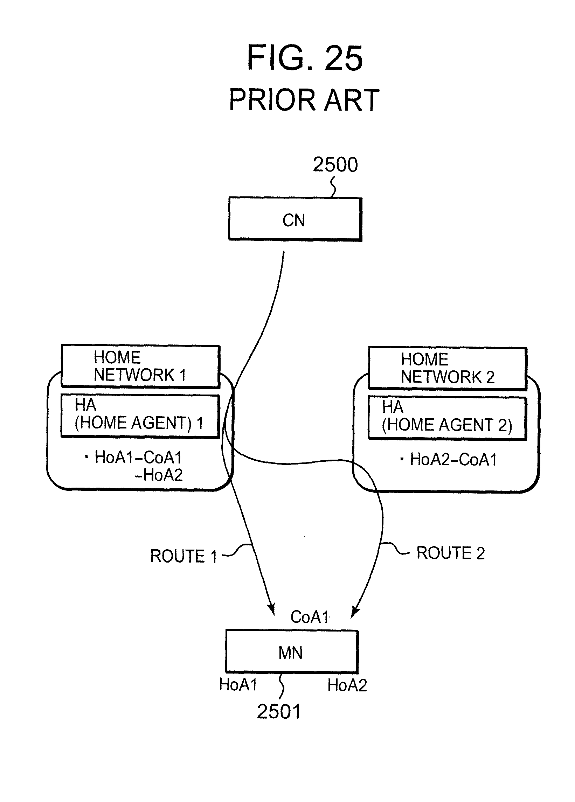

Fig. 25 is a diagram of an example of a conventional network configuration.

### BEST MODE FOR CARRYING OUT THE INVENTION

### <First Embodiment>

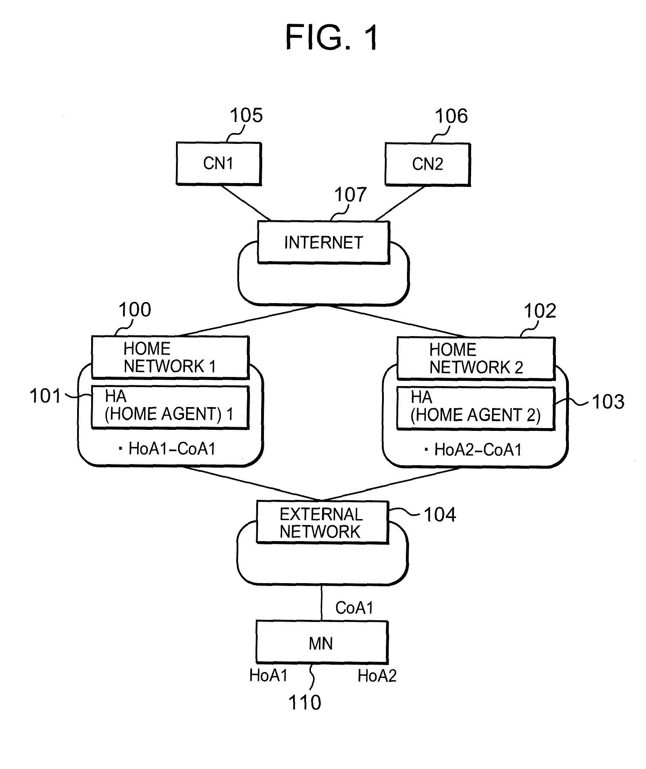

First, a network configuration according to a first embodiment of the present invention will be described with reference to Fig. 1. A HA 1 (101) present on a home network 1 (100) manages a HoA 1 of a MN 110. On the other hand, a HA 2 (103) present on a home network 2 (102) manages a HoA 2 of the MN 110. The MN 110 is connected to an external network 104 and holds a CoA 1 as an address to be used in the external network 104. A CN 1 (105) and a CN 2 (106) are correspondent nodes (communication terminals) of the MN 110 and are present on the internet 107.

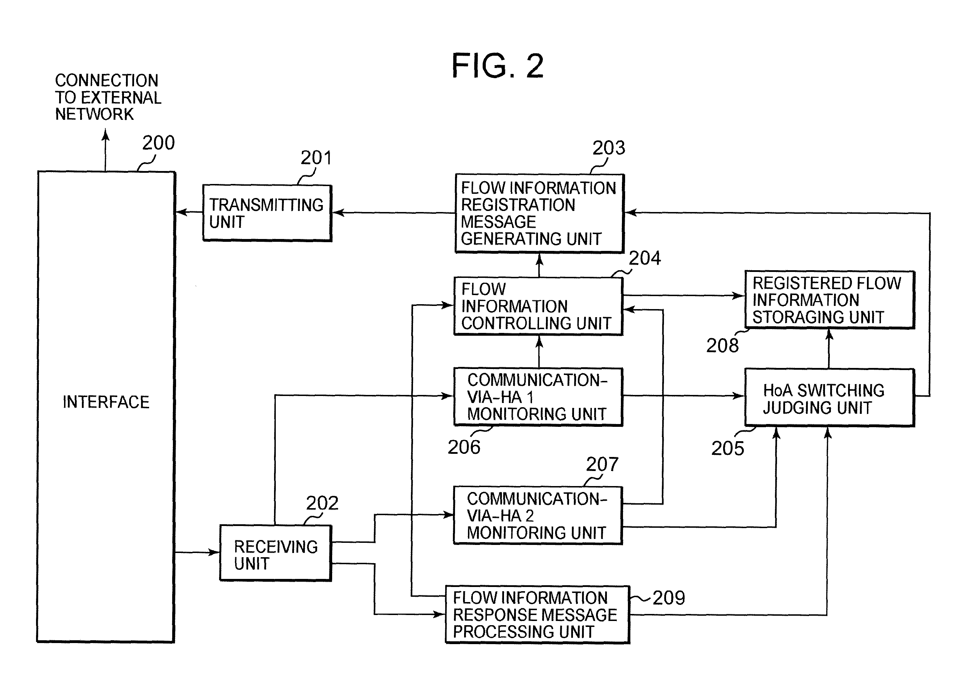

Next, a MN according to the first embodiment of the present invention will be described with reference to Fig. 2. The MN includes an interface 200, a transmitting unit 201, a receiving unit 202, a flow information registration message generating unit 203, a flow information controlling unit 204, a HoA switching judging unit 205, a communication-via-HA 1 monitoring unit 206, a communication-via-HA 2 monitoring unit 207, a registered flow information storaging unit 208, and a flow information response message processing unit 209. Constituent elements of the MN are not limited thereto. The MN can include other constituent elements.

The interface 200 is used for external communication (such as with the CN 1 and the CN 2). The transmitting unit 201 (equivalent to the above-described transmitting means) transmits a packet and the like to an external destination, via the interface 200. The receiving unit 202 receives a packet and the like from an external source, via the interface 200.

The flow information registration message generating unit 203 (equivalent to the above-described message generating means) receives an instruction from the flow information controlling unit 204, described hereafter, and generates a flow information registration message that includes flow information received from the flow information controlling unit 204 and information indicating an operation of the HA corresponding to the flow information. When the information indicating the operation of the HA specifies selection of a specific CoA, the flow information registration message includes the CoA itself, a binding unique identifier (BID) that is an identifier of the CoA, and the like.

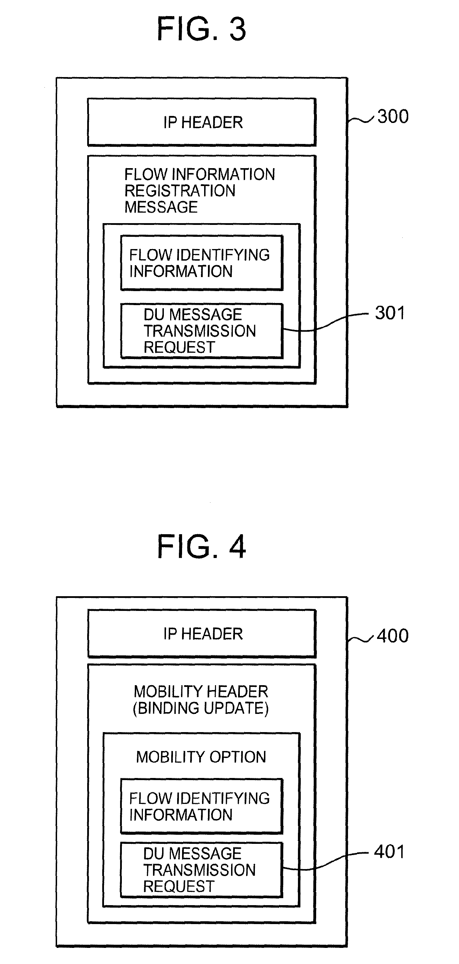

On the other hand, when an instruction from the HoA switching judging unit 205, described hereafter, is received and transmission of the DU message is specified, the flow information registration message generating unit 203 includes information expressing a DU message transmission request (such as a flag or by a CoA not being specified) in a flow information registration message 300. Fig. 3 is an example of a format 300 of the flow information registration message when a "DU message transmission request 301" is specified.

The "DU message transmission request 301" in Fig. 3 can be clearly expressed using a code, a flag, and the like. Alternatively, the DU message transmission request 301 can be implied by the CoA, which is ordinarily specified, intentionally not being specified. Fig. 4 is an example of a format 400 of the flow information registration message using a mobility header when a "DU message transmission request 401" is specified.

The flow information controlling unit 204 receives information from the communication-via-HA 1 monitoring unit 206, described hereafter, and the communication-via-HA 2 monitoring unit 207, described hereafter. When a CoA to be used for an arbitrary flow is judged, the flow information controlling unit 204 instructs the flow information registration message generating unit 203 to generate a flow information registration message and transmit the generated flow information registration message. The flow information registration message is used to register information indicating that the CoA is to be used.

At this time, the flow information controlling unit 204 gives the CoA to be used or identifying information of the CoA to the flow information registration message generating unit 203, in addition to identifying information (such as a flow ID, a flow label, a CN source address, a CN destination address, a protocol type, and a port number) of a subject flow. When the flow information controlling unit 204 receives a response message in response to the flow information registration message of which transmission has been instructed, and confirms that the flow information has been registered, the flow information controlling unit 204 instructs the registered flow information storaging unit 208, described hereafter, to hold the registered information.

The HoA switching judging unit 205 receives information from the communication-via-HA 1 monitoring unit 206, described hereafter, and the communication-via-HA 2 monitoring unit 207, described hereafter. When the HoA switching judging unit 205 judges that a HoA being used in an arbitrary flow should be switched, the HoA switching judging unit 205 instructs the flow information registration message generating unit 203 to generate a message (flow information registration message) requesting that the DU message be sent when the flow is received by proxy. At this time, the HoA switching judging unit 205 gives the identifying information (information such as the flow ID and the address of the correspondent node, described in Non-patent Document 2, above) of the subject flow to the flow information registration message generating unit 203.

As a reason for the judgment to be made to switch the HoA, a situation can be considered in which, when communication with the CN 1 via the HA 1 using the HoA 1 is performed, the quality of communication with the CN 1 is affected because the HoA 1 is used for communication with another node, and the like. In this case, in a communication to the HoA 1 started by the CN 2, for example, the CN 2 can be notified that the HoA 1 cannot be used or the CN 2 can be made to switch the destination without the communication with the CN 1 being affected, by a request being made to the HA 1 to transmit the DU message to give notification that the HoA 1 is unreachable or to make the CN 2 switch the destination to the HoA 2.

Even when communication with a specific flow or CN is refused, the HoA switching judging unit 205 can request that both HA 1 and HA 2 transmit the DU message to the specific flow or CN. In this case, notification can be given that no HoA can be used or, in other words, communication with the MN cannot be performed at all. Specific communication can be refused without the communication route between the HA and the MN being affected by these flows.

Even when the MN performs communication using a plurality of different home addresses managed by a same HA, the HoA switching judging unit 205 can request that the HA transmit the DU message to a specific flow or CN, thereby requesting that the specific flow or CN switch the HoA, or thereby refusing communication.

For example, the external network 104 is a network that can use both mobile IP and PMIP. Among the home addresses held by the MN, the HoA 1 is an address managed by mobile IP. The HoA 2 is an address managed by proxy mobile IPv6 (PMIP: network-based mobility control protocol). Moreover, these addresses are managed by the HA 1 that simultaneously provides functions of the HA in mobile IP and a local mobility anchor (LMA) in PMIP.

In other words, the MN uses the HoA 1 when using mobile IP and uses the HoA 2 when using PMIP. Under circumstances such as this, when the MN connects to the external network 104, the HoA switching judging unit 205 judges whether to use mobile IP or PMIP. Then, when mobile IP is judged to be used, the HoA switching judging unit 205 judges that a request should be made to the CN using the HoA 2 as the destination address to switch the HoA. Then, the HoA switching judging unit 205 instructs the flow information registration message generating unit 203 to generate a message (flow information registration message) requesting that the HA 1 transmit the DU message when the HA 1 receives a packet using the HoA 2 as the destination address as proxy.

On the other hand, when PMIP is judged to be used, the HA 1 is requested to transmit the DU message when the HA 1 receives a packet using the HoA 1 as the destination address as proxy. In this case, the flow information registration message includes information (HoA) used to identify the protocol that is not being used. The HA 1 can be notified of information used to identify the protocol to be used (PMIP or mobile IP) to indicated that a request is being made for the HA 1 to transmit the DU message regarding the HoA of the protocol not being used. When the MN simultaneously uses mobile IP and PMIP, the MN can request that the DU message be transmitted to a specific flow or CN.

Even when the MN has a plurality of interfaces, and each interface communicates using a different home address managed by a different HA, the HoA switching judging unit 205 requests that the HA transmit the DU message to a specific flow or CN. The HoA switching judging unit 205 can request that the specific flow or CN switch the HoA or can refuse communication.

In this case, the MN takes into consideration a state of load placed on each interface, communication speeds, charges, security states, roaming relationships, and the like, and judges whether the HoA should be switched or communication should be refused. At this time, when the CN switches the destination address (the HoA to be used), the interface of the MN receiving the packet is switched. The interface of the MN in this case can be connected to the external network 104.

Even when the MN has a plurality of interfaces, and each interface communicates using a different home address managed by the same HA, in a manner similar to that described above, the HoA switching judging unit 205 can request that the HA transmit the DU message to a specific flow or CN.

For example, when one interface of the MN is connected to an ordinary external network and uses mobile IP, another interface is connected to a network providing PMIP (Proxy Mobile IPv6: network-based mobility control protocol) and uses PMIP, and functions of the HA in mobile IP and the local mobility agent (LMA) in PMIP are provided by a same node, the MN takes into consideration which between PMIP and mobile IP to use, and judges whether to switch the HoA or refuse communication.

When the HoA switching judging unit 205 receives the response message (flow information response message) in response to the flow information registration message of which transmission has been instructed and confirms that the flow information has been registered, the HoA switching judging unit 205 instructs the registered flow information storaging unit 208, described hereafter, to hold the registered information.

The communication-via-HA 1 monitoring unit 206 monitors communication performed via the HA 1, namely a state of the communication using the HoA 1. When the correspondent node uses the HoA 1 as the destination address of a packet to be transmitted to the MN, all such packets are received by the HA 1 as proxy and transferred to the CoA. The communication-via-HA 2 monitoring unit 207 monitors communication performed via the HA 2, namely a state of the communication using the HoA 2. When the correspondent node uses the HoA 2 as the destination address of the packet to be transmitted to the MN, all such packets are received by the HA 2 as proxy and transferred to the CoA.

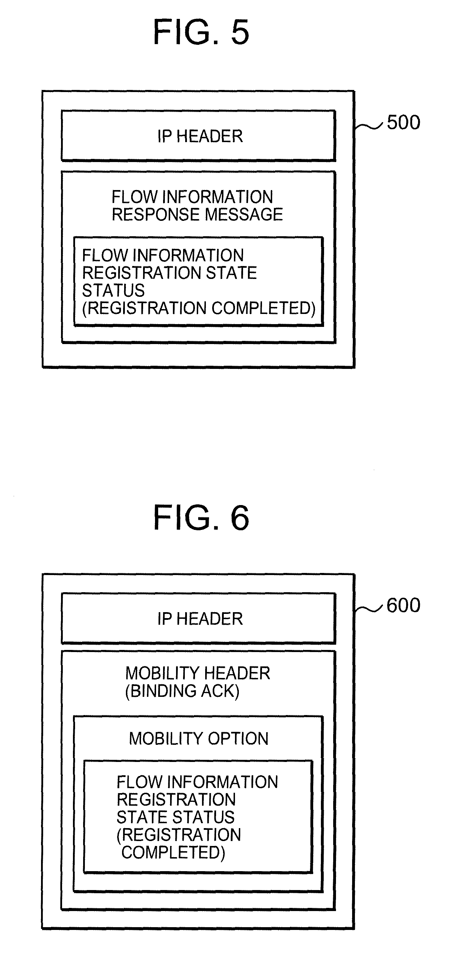

The registered flow information storaging unit 208 holds flow information registered by the flow information controlling unit 204 and the HoA switching judging unit 205 using the flow information registration message. The flow information response message processing unit 209 performs processing related to a received flow information response message and acquires information indicating a registration result of the flow information included in the message. The flow information response message processing unit 209 then notifies the flow information controlling unit 204 or the HoA switching judging unit 205 of the acquired information. Fig. 5 is an example of a format 500 of the flow information response message. Fig. 6 is an example of a format 600 of the flow information response message when a mobility header is used.

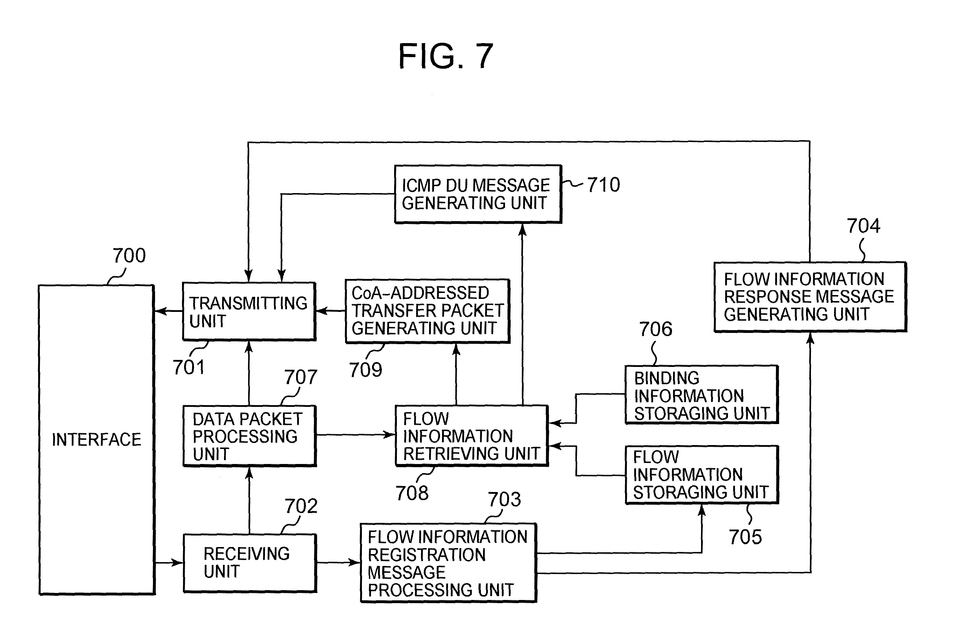

Next, the HA according to the first embodiment of the present invention will be described with reference to Fig. 7. The HA includes an interface 700, a transmitting unit 701, a receiving unit 702, a flow information registration message processing unit 703, a flow information response message generating unit 704, a flow information storaging unit 705, a binding information storaging unit 706, a data packet processing unit 707, a flow information retrieving unit 708, a CoA-addressed transfer packet generating unit 709, and an ICMP DU message generating unit 710. Constituent elements of the HA are not limited thereto. The HA can include other constituent elements.

The interface 700 is used for external communication (such as with the MN, the CN 1, and the CN 2). The transmitting unit 701 (equivalent to the above-described transmitting means) transmits a packet and the like to an external destination, via the interface 700. The receiving unit 702 (equivalent to the above-described receiving means) receives a packet and the like from an external source, via the interface 700.

The flow information registration message processing unit 703 performs processing related to the flow information registration message received from the MN, such as those shown in Fig. 3 and Fig. 4. The flow information registration message processing unit 703 judges whether the flow information included in the message can be registered. When the flow information can be registered, the flow information registration message processing unit 703 instructs the flow information storaging unit 705, described hereafter, to hold the flow information. The flow information registration message processing unit 703 also instructs the flow information response message generating unit 704, described hereafter, to generate a flow information response message and transmit the generated flow information response message. The flow information response message is used to notify the MN that is the source of a status indicating the registration state.

The flow information response message generating unit 704 generates flow information response messages 500 and 600, such as those shown in Fig. 5 and Fig. 6, indicating results of the processing performed by the flow information registration message processing unit 703. The flow information storaging unit 705 holds the flow information received from the flow information registration message processing unit 703. Alternatively, the binding information storaging unit 706, described hereafter, can hold the flow information.

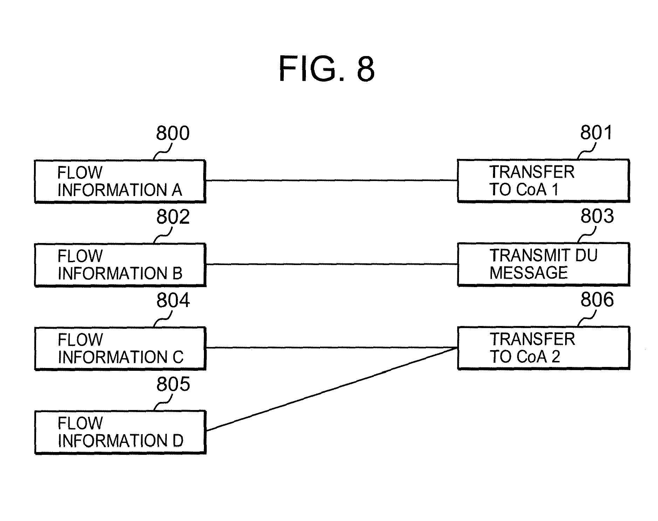

Fig. 8 is an example of the flow information held by the flow information storaging unit 705. As shown in Fig. 8, for example, information 801 stating that a transfer is made to the CoA 1 is associated with flow information A800 and stored. Information 803 stating that the DU message is transmitted is associated with flow information B802. Information 806 stating that a transfer is made to the CoA 2 is associated with pieces of flow information C804 and D805.

The binding information storaging unit 706 holds binding information including CoA information of which notification has been given by the MN. The data packet processing unit 707 performs processing related to a received (data) packet. When the packet is addressed to the HoA of the MN managed by the HA itself, the data packet processing unit 707 gives the packet to the flow information retrieving unit 708, described hereafter, and instructs the flow information retrieving unit 708 to search for matching flow information.

The flow information retrieving unit 708 references the flow information holding unit 705 and checks whether matching flow information is present regarding the proxy-received packet received from the data packet processing unit 707. When the matching flow information is present, the flow information retrieving unit 708 performs a process correlated with the flow information (such as a process for transfer to the CoA 1). When the corresponding process indicates use of a specific CoA, the flow information retrieving unit 708 acquires the CoA information from the binding information storaging unit 706 and gives the proxy-received packet and the CoA to be used to the CoA-addressed transfer packet generating unit 709. The flow information retrieving unit 708 instructs the CoA-addressed transfer packet generating unit 709 to generate an encapsulated packet and transmit the generated encapsulated packet.

On the other hand, when the corresponding process indicates transmission of the DU message, the flow information retrieving unit 708 gives the proxy-received packet to the ICMP DU message generating unit 710, described hereafter, and instructs the ICMP DU message generating unit 710 to transmit the DU message to the source node of the packet. When the matching flow information is not present, after selecting an arbitrary CoA, the flow information retrieving unit 708 instructs the CoA-addressed transfer packet generating unit 709 to encapsulate the packet and transfer the encapsulated packet.

The CoA-addressed transfer packet generating unit 709 receives an instruction from the flow information retrieving unit 708 and generates the encapsulated packet using the received CoA. The CoA-addressed transfer packet generating unit 709 then gives the encapsulated packet to the transmitting unit 701 and instructs the transmitting unit 701 to transmit the packet. The ICMP DU message generating unit 710 (equivalent to the above-described message generating means) receives an instruction from the flow information retrieving unit 708 and generates the DU message to be transmitted to the source node of the received packet. As a code indicating a reason for unreachability included in the generated DU message, Code 3 indicating "address unreachable" is preferably used.

As described above, according to the first embodiment of the present invention, the MN can request that the HA transmit the DU message to a specific CN or a specific flow, while maintaining a transfer request to a CoA from a HA. As a result, the CN receiving the DU message can be prompted to more quickly change the destination address. As a result of each HA being requested to transmit the DU message to the specific CN regarding each of a plurality of HoA, communication with the CN can be refused.

When the CN receives the DU message, the CN switches the current destination address of the packet addressed to the MN to another address. The other address can be an address already known by the CN (known through DNS look up) or an address newly acquired by DNS look up. However, whether the address is immediately switched depends on the embodiment of the CN. Depending on the embodiment, the CN may attempt to perform a retransmission.

As the message transmitted by the HA for the packet received by the HA as proxy, instead of the DU message, a protocol-specific message can be used that is used in an upper layer. In this case, the message to be used is required to be a message that can prompt the CN to change the destination address and perform effective retransmission control. For example, when the CN (a correspondent node, a relay server, or a SIP server) uses session initiation protocol (SIP) and transmits a message to the MN requesting session-start, the HA that has received the message as proxy can, for example, give notification to the CN that the session cannot be established, request re-establishment of the session from the CN, and furthermore, give notification to the CN of an address for re-establishment.

In this case, the MN registers to the HA in advance the types of messages received by the HA as proxy, the types of messages returned in response to the messages, information included in the messages, and the like. Use of protocol-specific messages used in the upper layer in place of the DU message, described herein, similarly applies to embodiments of the present invention in addition to the first embodiment.

### <Second Embodiment>

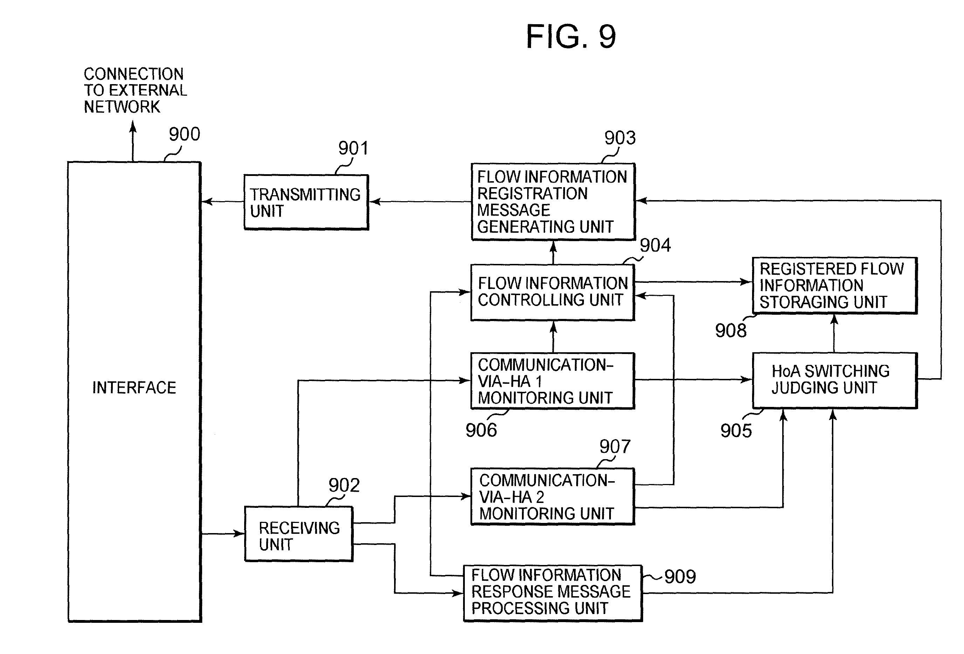

A second embodiment of the present invention will be described. A network configuration according to the second embodiment is similar to the network configuration according to the first embodiment shown in Fig. 1. Therefore, the second embodiment will be described with reference to Fig. 1 when required. First, a MN according to the second embodiment of the present invention will be described with reference to Fig. 9. The MN according to the second embodiment differs from the MN according to the first embodiment only regarding operations of a HoA switching judging unit 905 and a flow information registration message generating unit 903. Respective operations will be described below.

The HoA switching judging unit 905 receives information from a communication-via-HA 1 monitoring unit 906 and a communication-via-HA 2 monitoring unit 907. When the HoA switching judging unit 905 judges that a HoA being used in an arbitrary flow should be switched, the HoA switching judging unit 905 instructs the flow information registration message generating unit 903 to generate a flow information registration message requesting that the DU message be sent to the flow. The flow information registration message includes a code indicating switching of the destination address.

At this time, the HoA switching judging unit 905 gives a "New Code" that is the code indicating switching of the address or information instructing specification of the New Code to a flow information registration message generating unit 903 in addition to the identifying information of the subject flow. The DU message transmitted from the HA to the CN includes the "New Code" indicating the switching of the address.

As a reason for the judgment to be made to switch the HoA, a situation can be considered in which, when communication with the CN 1 via the HA 1 using the HoA 1 is performed, the quality of communication with the CN 1 is affected because the HoA 1 is used for communication with another node, and the like. In this case, in a communication to the HoA 1 started by the CN 2, for example, the CN 2 can be notified that the HoA 1 cannot be used or the CN 2 can be made to switch the destination without the communication with the CN 1 being affected, by a request being made to the HA 1 to transmit the DU message to give notification that the HoA 1 is unreachable or to make the CN 2 switch the destination to the HoA 2.

Even when communication with a specific flow or CN is refused, the HoA switching judging unit 905 can request that both HA 1 and HA 2 transmit the DU message to the specific flow or CN. In this case, notification can be given that no HoA can be used or, in other words, communication with the MN cannot be performed at all. Specific communication can be refused without the communication route between the HA and the MN being affected by these flows.

Even when the MN performs communication using a plurality of different home addresses managed by a same HA, the HoA switching judging unit 905 can request that the HA transmit the DU message to a specific flow or CN, thereby requesting that the specific flow or CN switch the HoA, or thereby refusing communication.

For example, the external network 104 is a network that can use both mobile IP and PMIP. Among the home addresses held by the MN, the HoA 1 is an address managed by mobile IP. The HoA 2 is an address managed by proxy mobile IPv6 (PMIP: network-based mobility control protocol). Moreover, these addresses are managed by the HA 1 that simultaneously provides functions of the HA in mobile IP and a local mobility anchor (LMA) in PMIP.

In other words, the MN uses the HoA 1 when using mobile IP and uses the HoA 2 when using PMIP. Under circumstances such as this, when the MN connects to the external network 104, the HoA switching judging unit 905 judges whether to use mobile IP or PMIP. Then, when mobile IP is judged to be used, the HoA switching judging unit 905 judges that a request should be made to the CN using the HoA 2 as the destination address to switch the HoA.

Then, the HoA switching judging unit 905 instructs the flow information registration message generating unit 903 to generate a message (flow information registration message) requesting that the HA 1 transmit the DU message when the HA 1 receives a packet using the HoA 2 as the destination address as proxy.

On the other hand, when PMIP is judged to be used, the HA 1 is requested to transmit the DU message when the HA 1 receives a packet using the HoA 1 as the destination address as proxy. In this case, the flow information registration message includes information (HoA) used to identify the protocol that is not being used. The HA 1 can be notified of information used to identify the protocol to be used (PMIP or mobile IP) to indicated that a request is being made for the HA 1 to transmit the DU message regarding the HoA of the protocol not being used. When the MN simultaneously uses mobile IP and PMIP, the MN can request that the DU message be transmitted to a specific flow or CN.

Even when the MN has a plurality of interfaces, and each interface communicates using a different home address managed by a different HA, the HoA switching judging unit 905 requests that the HA transmit the DU message to a specific flow or CN. The HoA switching judging unit 905 can request that the specific flow or CN switch the HoA or can refuse communication.

In this case, the MN takes into consideration a state of load placed on each interface, communication speeds, charges, security states, roaming relationships, and the like, and judges whether the HoA should be switched or communication should be refused. At this time, when the CN switches the destination address (the HoA to be used), the interface of the MN receiving the packet is switched. The interface of the MN in this instance can be connected to an external network.

Even when the MN has a plurality of interfaces, and each interface communicates using a different home address managed by the same HA, in a manner similar to that described above, the HoA switching judging unit 905 can request that the HA transmit the DU message to a specific flow or CN.

For example, when one interface of the MN is connected to an ordinary external network and uses mobile IP, another interface is connected to a network providing PMIP (Proxy Mobile IPv6: network-based mobility control protocol) and uses PMIP, and functions of the HA in mobile IP and the local mobility anchor (LMA) in PMIP are provided by a same node, the MN takes into consideration which between PMIP and mobile IP to use, and judges whether to switch the HoA or refuse communication.

When the HoA switching judging unit 905 receives the response message in response to the flow information registration message of which transmission has been instructed and confirms that the flow information has been registered, the HoA switching judging unit 905 instructs a registered flow information storaging unit 908 to hold the registered information.

The flow information registration message generating unit 903 receives an instruction from a flow information controlling unit 904 and generates a flow information registration message that includes the received flow information and information indicating an operation of the HA corresponding to the flow information. When the information indicating the operation of the HA specifies selection of a specific CoA, the flow information registration message includes the CoA itself, a BID that is an identifier of the CoA, and the like.

On the other hand, when, as a result of an instruction form the HoA switching judging unit 905, the flow information registration message generating unit 903 is instructed to specify transmission of the DU message as the operation of the HA corresponding to the flow information, the flow information registration message generating unit 903 includes information expressing DU message transmission (such as a code [can also be a code other than the "New Code"], a flag, or by a CoA not being specified [when a binding update message is used]) in the flow information registration message.

When the "New Code" indicating switching of the address or information instructing specification of the New Code is indicated when the instruction from the HoA switching judging unit 905 is received, the flow information registration message including the "New Code" or the information instructing specification of the New Code is generated.

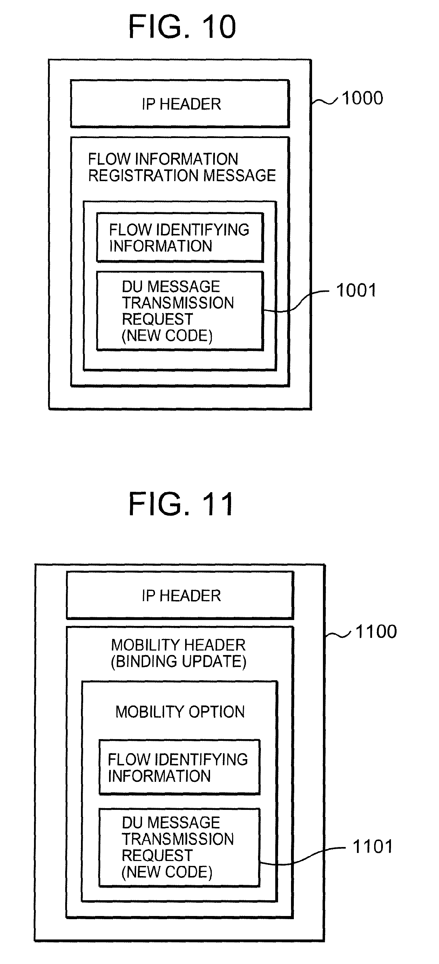

Fig. 10 is an example of a format 1000 of the flow information registration message when transmission of a DU message including the "New Code" is specified. Fig. 11 is an example of a format 1100 of the flow information registration message using a mobility header when transmission of the DU message including the "New Code" is specified. "DU message transmission request 1001 and 1101" in Fig.10 and Fig.11 can be clearly expressed using a code, a flag, and the like. Alternatively, when the binding update message is used as the flow information registration message, the DU message transmission request can be implied by the CoA, which is ordinarily specified, intentionally not being specified.

Next, a HA according to the second embodiment of the present invention will be described. A configuration of the HA according to the second embodiment of the present invention is similar to the configuration of the HA according to the first embodiment shown in Fig. 7. The HA according to the second embodiment differs from the HA according to the first embodiment regarding operations of the flow information registration message processing unit 703, the flow information storaging unit 705, the flow information response message generating unit 704, and the ICMP DU message generating unit 710. Respective operations will be described below.

The flow information registration message processing unit 703 performs processing related to the flow information registration message received from the MN, such as those shown in Fig. 10 and Fig. 11. The flow information registration message processing unit 703 judges whether the flow information included in the message can be registered. When the flow information can be registered, the flow information registration message processing unit 703 instructs the flow information storaging unit 705 to hold the flow information. When the message includes information (such as a flag) requesting that notification be given of the "New Code" indicating switching of the address, the flow information registration message processing unit 703 instructs the flow information storaging unit 705 to simultaneously hold the information (such as the flag). The flow information registration message processing unit 703 also instructs the flow information response message generating unit 704 to generate a flow information response message and transmit the generated flow information response message. The flow information response message is used to notify the MN that is the source of a status indicating the registration state.

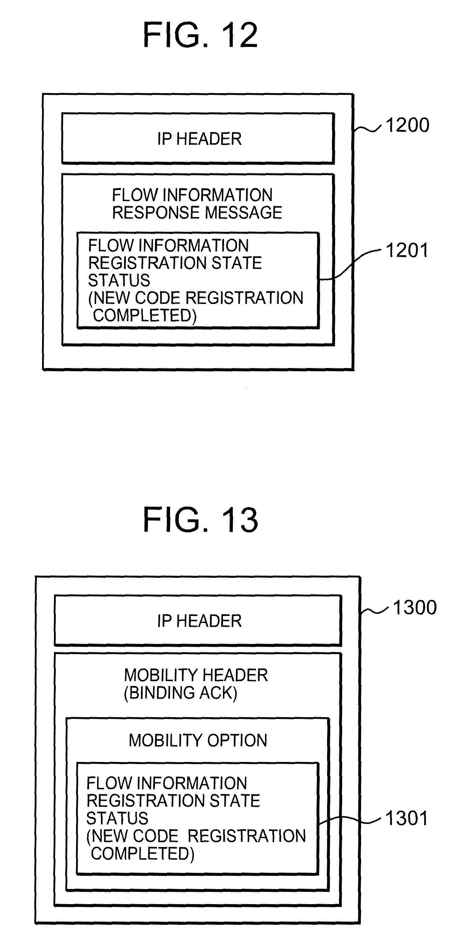

The flow information response message generating unit 704 generates a flow information response message (in format) 1200 and a flow information response message (in format) 1300 when the mobility header is used, such as those shown in Fig. 12 and Fig. 13, that include status indicating results of the processing performed by the flow information registration message processing unit 703. When the flow information registration message includes the request for specifying the "New Code" as the code in the DU message, statuses (flow information registration state statuses) 1201 and 1301 indicating the results of registration of the flow information including the "New Code" are also included.

The flow information storaging unit 705 holds the flow information received from the flow information registration message processing unit 703. When transmission of the DU message is indicated as the operation of the HA corresponding to the flow information, and the "New Code" is included as the code specified in the DU message, this information is also held. Alternatively, the binding information storaging unit 706 can hold the flow information.

The ICMP DU message generating unit 710 receives an instruction from the flow information retrieving unit 708 and generates the DU message to be transmitted to the source node of the received packet. When the "New Code" is included in the received information as the code specified in the DU message, the "New Code" is included as the code indicating the reason for unreachability included in the generated DU message. When the code is not specified, Code 3 indicating "address unreachable" is preferably used.

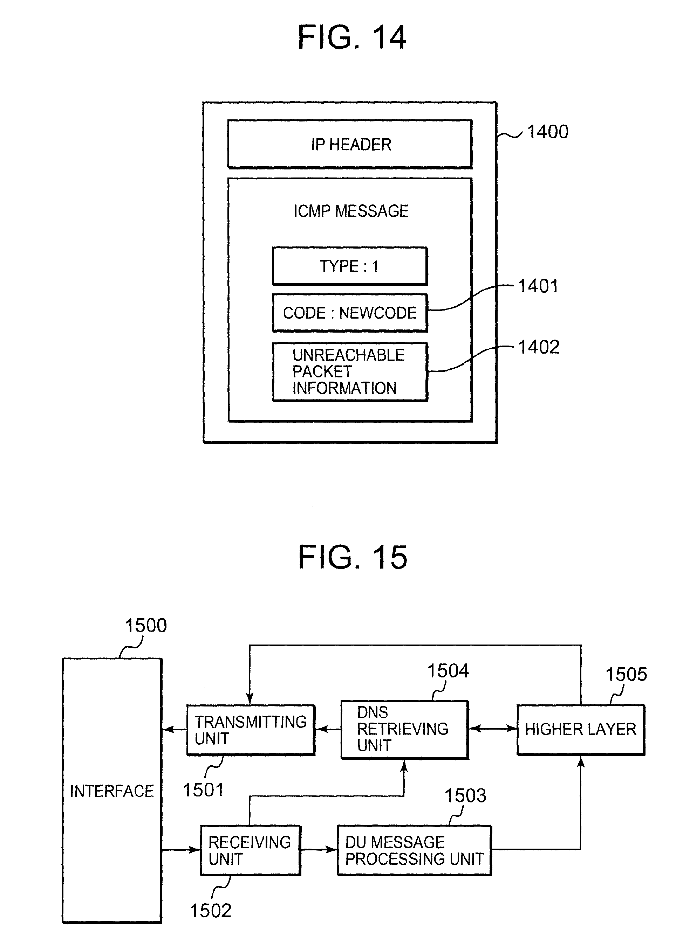

Fig. 14 is an example of a format 1400 of the DU message including the "New Code". The "New Code" is included in a code field 1401 of the DU message. An "unreachable packet information field 1402" includes, for example, information (such as flow information) related to a packet that is unable to reach the destination.

Next, a CN according to the second embodiment of the present invention will be described with reference to Fig. 15. The CN includes an interface 1500, a transmitting unit 1501, a receiving unit 1502, a DU message processing unit 1503, a DNS retrieving unit 1504, and a higher layer 1505. Constituent elements of the CN are not limited thereto. The CN can include other constituent elements.

The interface 1500 is used for external communication (such as with the MN). The transmitting unit 1501 transmits a packet and the like to an external destination, via the interface 1500. The receiving unit 1502 receives a packet and the like from an external source, via the interface 1500.

The DU message processing unit 1503 performs processing related to the DU message returned in response to the packet transmitted to the MN from the CN itself. The DU message processing unit 1503 gives information included in the message, such as the code indicating the reason the packet cannot reach the destination, to the higher layer 1505, described hereafter. The DU message processing unit 1503 can also recognize the code included in the message as being the "New Code", and instruct the DNS retrieving unit 1504, described hereafter, to search for the address of the MN.

The DNS retrieving unit 1504 receives an instruction from the higher layer 1505, described hereafter, and transmits a DNS request for performing address retrieval regarding a host name of the MN of which notification has been given. The DNS retrieving unit 1504 also performs processing of a response to the transmitted DNS request and notifies the higher layer 1505, described hereafter, of an included address. The higher layer 1505 indicates overall layers positioned in the upper level of the IP layers. The higher layer 1505 includes a transport layer (TCP/UDP) and applications above the transport layer (TCP/UDP).

When the higher layer 1505 receives notification of the DU message from the DU message processing unit 1503, the higher layer 1505 identifies the packet that is unable to reach the destination indicated in the DU message, and furthermore, checks the code indicating the reason the packet cannot reach the destination. When the code is the "New Code", the higher layer 1505 judges that the destination address of the packet should be changed, and checks whether an alternative address is available. When the higher layer 1505 knows the alternative address, the higher layer 1505 transmits the packet using the alternative address.

On the other hand, when the higher layer 1505 does not know the alternative address, the higher layer 1505 gives the host name of the MN that is the destination to the DNS retrieving unit 1504, and instructs the DNS retrieving unit 1504 to perform an address retrieval using DNS. The CN switches the destination address of the packet addressed to the MN to another address immediately after receiving the DU message. The other address can be an address already known by the CN (known through DNS look up) or an address newly acquired by DNS look up.

As described above, according to the second embodiment of the present invention, the MN can request that the HA transmit the DU message to a specific CN or a specific flow, while maintaining a transfer request to the CoA from the HA. As a result of each HA being requested to transmit the DU message to the specific CN regarding each of a plurality of HoA, communication with the CN can be refused.

Moreover, as a result of the "New Code" indicating "switching of the destination address" being specified as the code indicating the reason for unreachability included in the DU message transmitted to the CN, the CN can immediately recognize that the action that should be taken is to change the destination address, rather than retransmitting the packet and the like.

### <Third Embodiment>

A third embodiment of the present invention will be described. A network configuration according to the third embodiment is similar to the network configuration according to the first embodiment shown in Fig. 1. Therefore, the third embodiment will be described with reference to Fig. 1 when required. First, a MN according to the third embodiment of the present invention will be described. A configuration of the MN according to the third embodiment of the present invention is similar to the configuration of the MN according to the first embodiment shown in Fig. 2. Therefore, units having the same name are described using the same reference number. The MN according to the third embodiment differs from the MN according to the first embodiment only regarding operations of the HoA switching judging unit 205 and the flow information registration message generating unit 203. Respective operations will be described below.

The HoA switching judging unit 205 receives information from the communication-via-HA 1 monitoring unit 206 and the communication-via-HA 2 monitoring unit 207. When the HoA switching judging unit 205 judges that a HoA being used as the destination address in an arbitrary flow should be switched, the HoA switching judging unit 205 instructs the flow information registration message generating unit 203 to generate a flow information registration message requesting that a DU message for giving notification of a switch-to address be sent, and transmit the generated flow information registration message. At this time, the HoA switching judging unit 205 gives a "New Code" indicating switching of the destination address and an address to which the destination address is switched to the flow information registration message generating unit 203, in addition to flow identifying information of the subject flow.

As a reason for the judgment to be made to switch the HoA, a situation can be considered in which, when communication with the CN 1 via the HA 1 using the HoA 1 is performed, the quality of communication with the CN 1 is affected because the HoA 1 is used for communication with another node, and the like. In this case, in a communication to the HoA 1 started by the CN 2, for example, the CN 2 can be notified that the HoA 1 cannot be used or the CN 2 can be made to switch the destination without the communication with the CN 1 being affected, by a request being made to the HA 1 to transmit the DU message to give notification that the HoA 1 is unreachable or to make the CN 2 switch the destination to the HoA 2.

Even when communication with a specific flow or CN is refused, the HoA switching judging unit 205 can request that both HA 1 and HA 2 transmit the DU message to the specific flow or CN. In this case, notification can be given that no HoA can be used or, in other words, communication with the MN cannot be performed at all. Specific communication can be refused without the communication route between the HA and the MN being affected by these flows.

Even when the MN performs communication using a plurality of different home addresses managed by a same HA, the HoA switching judging unit 205 can request that the HA transmit the DU message to a specific flow or CN, thereby requesting that the specific flow or CN switch the HoA, or thereby refusing communication.

For example, the external network 104 is a network that can use both mobile IP and PMIP. Among the home addresses held by the MN, the HoA 1 is an address managed by mobile IP. The HoA 2 is an address managed by proxy mobile IPv6 (PMIP: network-based mobility control protocol). Moreover, these addresses are managed by the HA 1 that simultaneously provides functions of the HA in mobile IP and a local mobility anchor (LMA) in PMIP.

In other words, the MN uses the HoA 1 when using mobile IP and uses the HoA 2 when using PMIP. Under circumstances such as this, when the MN connects to the external network 104, the HoA switching judging unit 205 judges whether to use mobile IP or PMIP. Then, when mobile IP is judged to be used, the HoA switching judging unit 205 judges that a request should be made to the CN using the HoA 2 as the destination address to switch the HoA. Then, the HoA switching judging unit 205 instructs the flow information registration message generating unit 203 to generate a message (flow information registration message) requesting that the HA 1 transmit the DU message when the HA 1 receives a packet using the HoA 2 as the destination address as proxy.

On the other hand, when PMIP is judged to be used, the HA 1 is requested to transmit the DU message when the HA 1 receives a packet using the HoA 1 as the destination address as proxy. In this case, the flow information registration message includes information (HoA) used to identify the protocol that is not being used. The HA 1 can be notified of information used to identify the protocol to be used (PMIP or mobile IP) to indicated that a request is being made for the HA 1 to transmit the DU message regarding the HoA of the protocol not being used. When the MN simultaneously uses mobile IP and PMIP, the MN can request that the DU message be transmitted to a specific flow or CN.

Even when the MN has a plurality of interfaces, and each interface communicates using a different home address managed by a different HA, the HoA switching judging unit 205 requests that the HA transmit the DU message to a specific flow or CN. The HoA switching judging unit 205 can request that the specific flow or CN switch the HoA or can refuse communication.

In this case, the MN takes into consideration a state of load placed on each interface, communication speeds, charges, security states, roaming relationships, and the like, and judges whether the HoA should be switched or communication should be refused. At this time, when the CN switches the destination address (the HoA to be used), the interface of the MN receiving the packet is switched. The interface of the MN in this instance can be connected to the external network 104.

Even when the MN has a plurality of interfaces, and each interface communicates using a different home address managed by the same HA, in a manner similar to that described above, the HoA switching judging unit 205 can request that the HA transmit the DU message to a specific flow or CN.

For example, when one interface of the MN is connected to an ordinary external network and uses mobile IP, another interface is connected to a network providing PMIP (Proxy Mobile IPv6: network-based mobility control protocol) and uses PMIP, and functions of the HA in mobile IP and the local mobility anchor (LMA) in PMIP are provided by a same node, the MN takes into consideration which between PMIP and mobile IP to use, and judges whether to switch the HoA or refuse communication.

The HoA switching judging unit 205 can give only the address to which the destination address is switched to the flow information registration message generating unit 203 in addition to the flow identifying information of the subject flow. The DU message transmitted from the HA to the CN includes the code indicating switching of the address and the address to which the destination address is switched (or only the address to which the destination address is switched). When the HoA switching judging unit 205 receives the response message in response to the transmitted flow information registration message and confirms that the flow information has been registered, the HoA switching judging unit 205 instructs the registered flow information storaging unit 208 to hold the registered flow information.

The flow information registration message generating unit 203 receives an instruction from a flow information controlling unit 204 and generates a flow information registration message that includes the received flow identifying information and information indicating an operation of the HA corresponding to the flow identifying information. When transmission of the DU message is specified as the operation of the HA corresponding to the flow information, information expressing DU message transmission (such as a code [can also be a code other than the "New Code"], a flag, or by a CoA not being specified) can be included in the generated flow information registration message.

Moreover, the flow information registration message generating unit 203 includes the "New Code" indicating switching of the destination address and the address to which the destination address is switched (such as the HoA 2) in the flow information registration message as the information to be included in the DU message. When selection of a specific CoA is specified as the operation of the HA corresponding to the flow information, the flow information registration message generating unit 203 includes the CoA itself, a BID that is an identifier of the CoA, and the like.

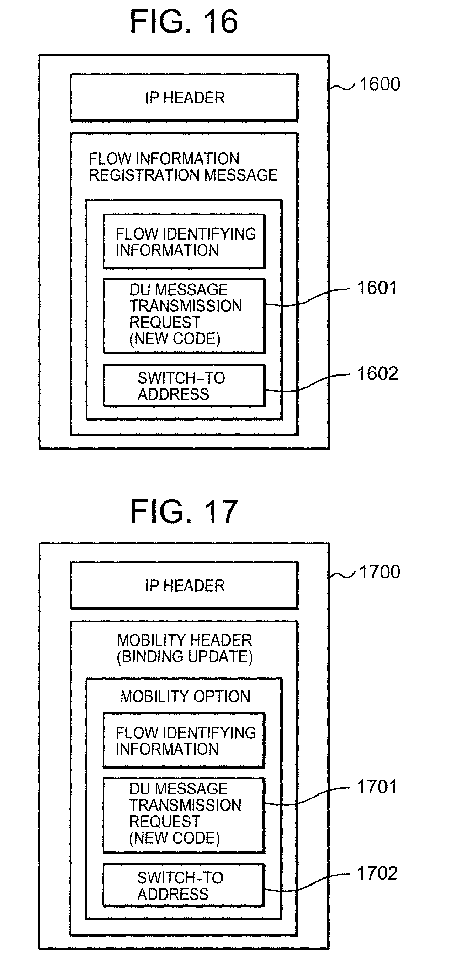

Fig. 16 is an example of a format 1600 of the flow information registration message for giving notification of a switch-to address when transmission of a DU message is specified, the DU message including a DU message transmission request 1601 including the "New Code" indicating switching of the destination address and an address (switch-to address) 1602 to which the destination address is switched. Fig. 17 is an example of a format 1700 of the flow information registration message for giving notification of a switch-to address using a mobility header when transmission of a DU message is specified, the DU message including a DU message transmission request 1701 including the "New Code" indicating switching of the destination address and an address (switch-to address) 1702 to which the destination address is switched.

Next, a HA according to the third embodiment of the present invention will be described. A configuration of the HA according to the third embodiment of the present invention is similar to the configuration of the HA according to the first embodiment shown in Fig. 7. Units having the same name are described using the same reference number. The HA according to the third embodiment differs from the HA according to the first embodiment regarding operations of the flow information registration message processing unit 703, the flow information storaging unit 705, the flow information response message generating unit 704, and the ICMP DU message generating unit 710. Respective operations will be described below.

The flow information registration message processing unit 703 performs processing related to the flow information registration message received from the MN, such as those shown in Fig. 16 and Fig. 17. The flow information registration message processing unit 703 judges whether the flow information included in the message can be registered. When the flow information can be registered, the flow information registration message processing unit 703 instructs the flow information storaging unit 705 to hold the flow information. The information to be held includes the flow identifying information and information indicating the operation of the HA corresponding to the flow identifying information.

When the information indicating the operation of the HA specifies transmission of the DU message, the "New Code" indicating switching of the destination address and the address to which the destination address is switched are included. The flow information registration message processing unit 703 instructs the flow information response message generating unit 704 to generate a flow information response message and transmit the generated flow information response message. The flow information response message is used to notify the MN that is the source of a status indicating the registration state.

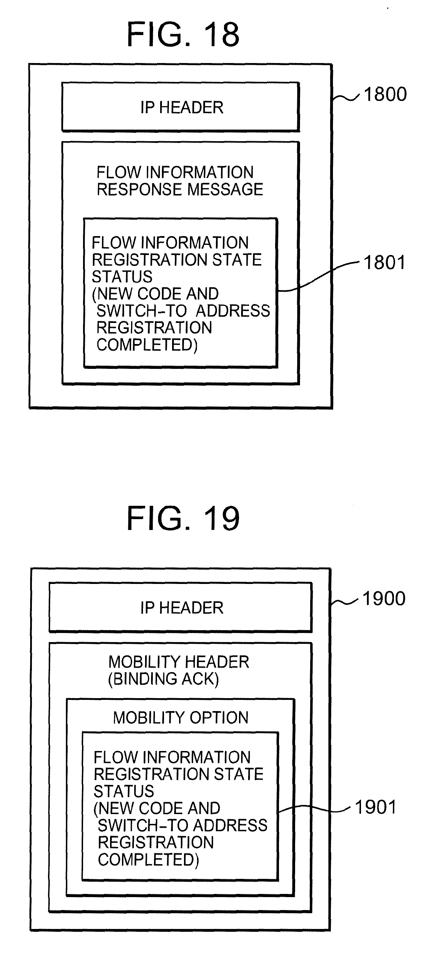

The flow information response message generating unit 704 generates a flow information response message (in format) 1800 and a flow information response message (in format) 1900 using a mobility header, such as those shown in Fig. 18 and Fig. 19, that include status indicating results of the processing performed by the flow information registration message processing unit 703. When the flow information registration message includes the request for instructing transmission of the DU message and the address to which the destination address is switched, in addition to the flow identifying information, statuses (flow information registration state statuses) 1801 and 1901 indicating the results of registration of the flow information including these information are also included.

The flow information storaging unit 705 holds the flow information received from the flow information registration message processing unit 703. In the flow information, when transmission of the DU message is specified as the operation of the HA corresponding to the flow identifying information, and the "New Code" indicating switching of the destination address and the address to which the destination address is switched are further included as the code included in the DU message, these information are also held. Alternatively, the binding information storaging unit 706 can hold the flow information.

The ICMP DU message generating unit 710 receives an instruction from the flow information retrieving unit 708 and generates the DU message to be transmitted to the source node of the received packet. When the "New Code" indicating switching of the destination address and the address to which the destination address is switched are included in the received information as the code specified in the DU message, the ICMP DU message generating unit 710 includes the "New Code" as the code indicating the reason for unreachability included in the generated DU message, and further adds an option including the address to which the destination address is switched.

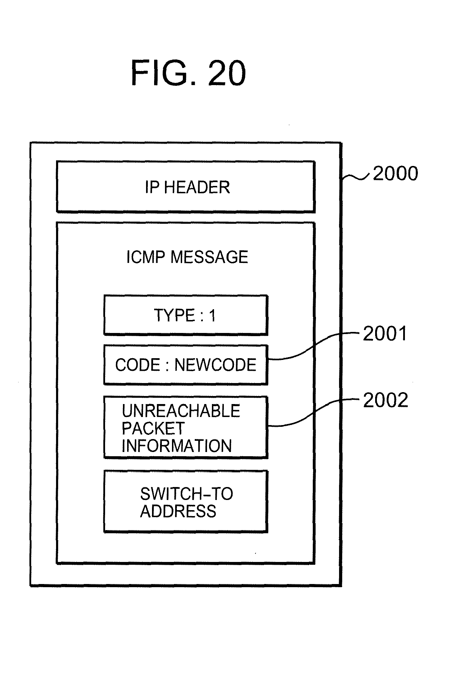

When the code is not specified, Code 3 indicating "address unreachable" is preferably used. Fig. 20 is an example of the DU message (in format) 2000 including the "New Code". The "New Code" is included in a code field 2001 of the DU message. An "unreachable packet information field 2002" includes, for example, information (such as flow information) related to a packet that is unable to reach the destination.

Next, a CN according to the third embodiment of the present invention will be described. A configuration of the CN according to the third embodiment of the present invention is similar to the configuration of the CN according to the second embodiment shown in Fig. 15. Units having the same name are described using the same reference number. The CN according to the third embodiment differs from the CN according to the second embodiment regarding operations of the DU message processing unit 1503 and the higher layer 1505. Respective operations will be described below.

The DU message processing unit 1503 performs processing related to the DU message returned in response to the packet transmitted to the MN from the CN itself. The DU message processing unit 1503 gives information included in the message, such as the code indicating the reason the packet cannot reach the destination, to the higher layer 1505. When the DU message processing unit 1503 recognizes that the "New Code" indicating switching of the destination address and the switch-to address are included, the DU message processing unit 1503 gives all of these information to the higher layer 1505. The DU message processing unit 1503 can also instruct the DNS retrieving unit 1504 to search for a new address of the MN.

The higher layer 1505 indicates overall layers positioned in the upper level of the IP layers. The higher layer 1505 includes a transport layer (TCP/UDP) and applications above the transport layer (TCP/UDP). When the higher layer 1505 receives notification of the DU message from the DU message processing unit 1503, the higher layer 1505 identifies the packet that is unable to reach the destination indicated in the DU message, and furthermore, checks the code indicating the reason the packet cannot reach the destination.

When the code is the "New Code" indicating switching of the destination address, the higher layer 1505 judges that the destination address of the packet should be changed. The higher layer 1505 performs re-transmission of the packet using the address to which the destination address is switched, included in the option. When the address to which the destination address is switched is not included, the higher layer 1505 gives the host name of the MN that is the destination to the DNS retrieving unit 1504, and instructs the DNS retrieving unit 1504 to perform an address retrieval using DNS.

As described above, according to the third embodiment of the present invention, the MN can request that the HA transmit the DU message to a specific CN or a specific flow, while maintaining a transfer request to the CoA from the HA. As a result of the "New Code" indicating "switching of the destination address" being specified as the code indicating the reason for unreachability included in the DU message transmitted to the CN, the CN can immediately recognize that the action that should be taken is to change the destination address, rather than retransmitting the packet and the like.

### <Fourth Embodiment>

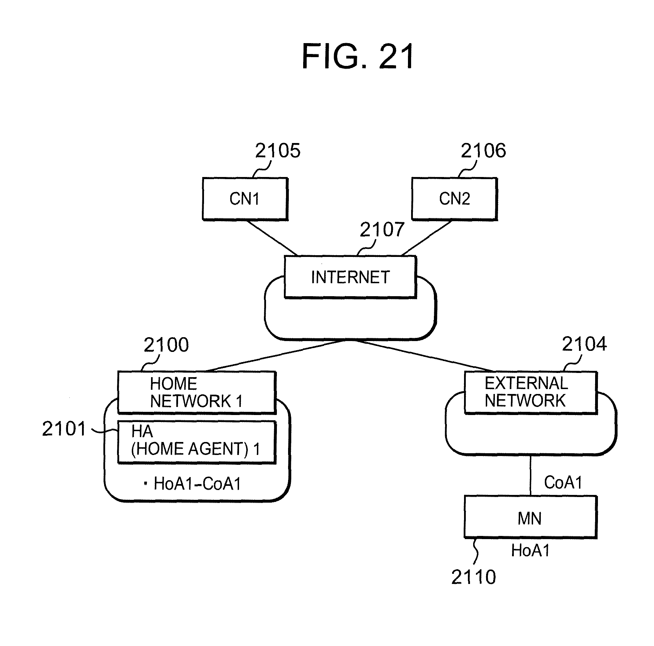

A network configuration according to a fourth embodiment of the present invention will be described with reference to Fig. 21. A HA 1 (2101) present on a home network 1 (2100) manages a HoA 1 of a MN 2110. The MN 2110 is connected to an external network 2104 and holds a CoA 1 as an address to be used therein. A CN 1 (2105) and a CN 2 (2106) are correspondent nodes of the MN 2110 and are present on the internet 2107.

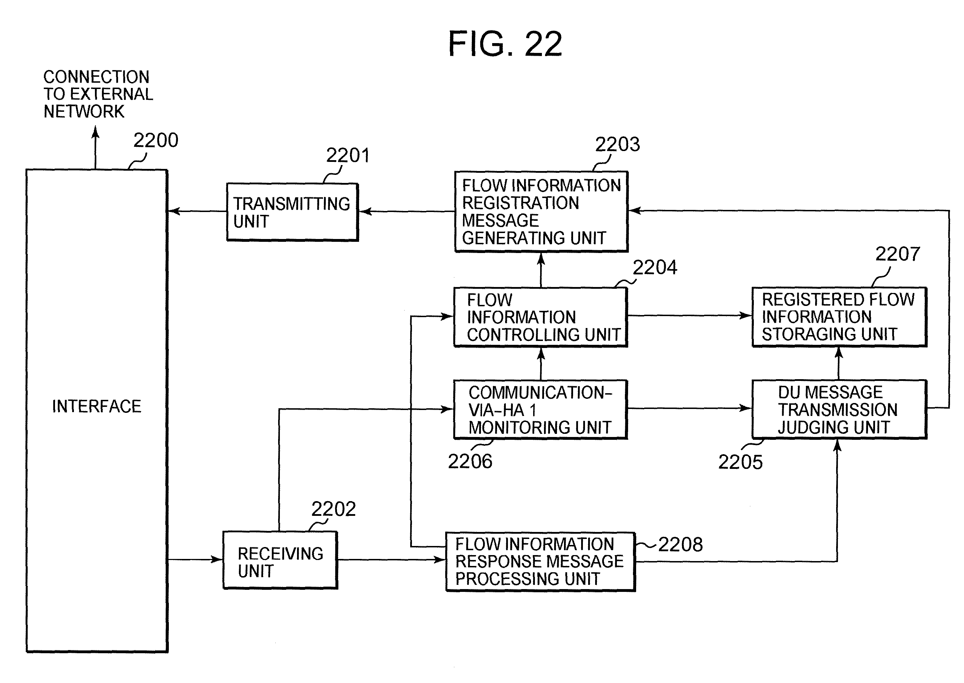

Next, a MN according to the fourth embodiment of the present invention will be described with reference to Fig. 22. The MN includes an interface 2200, a transmitting unit 2201, a receiving unit 2202, a flow information registration message generating unit 2203, a flow information controlling unit 2204, a DU message transmission judging unit 2205, a communication-via-HA 1 monitoring unit 2206, a registered flow information storaging unit 2207, and a flow information response message processing unit 2208. Constituent elements other than the DU message transmission judging unit 2205 are the same as the constituent elements of the MN according to the first embodiment of the present invention. Therefore, explanations thereof are omitted.

The DU message transmission judging unit 2205 references information from the communication-via-HA 1 monitoring unit 2206 that monitors communication performed via the HA 1 using the HoA 1, and judges whether a DU message should be transmitted to the CN that has transmitted a packet designating the HoA 1 of the MN as the destination address. When the DU message transmission judging unit 2205 judges that the DU message should be transmitted, the DU message transmission judging unit 2205 instructs the flow information registration message generating unit 2203 to generate a flow information registration message requesting that the DU message be transmitted to the CN (flow identifying information). At this time, the DU message transmission judging unit 2205 gives the identifying information of the subject flow to the flow information registration message generating unit 2203.

As a reason for the judgment to be made that the DU message should be transmitted, a situation can be considered in which, when communication with the CN 1 via the HA 1 using the HoA 1 is performed, the quality of communication with the CN 1 is affected because the HoA 1 is used for communication with another node, and the like. In this case, in a communication to the HoA 1 started by the CN 2, for example, the CN 2 can be notified that the HoA 1 cannot be used or the CN 2 can be made to switch the destination without the communication with the CN 1 being affected, by a request being made to the HA 1 to transmit the DU message to give notification that the HoA 1 is unreachable or to make the CN 2 switch the destination to the HoA 2.

Even when communication with a specific flow or CN is refused, the DU message transmission judging unit 2205 can request that both HA 1 and HA 2 transmit the DU message to the specific flow or CN. In this case, notification can be given that no HoA can be used or, in other words, communication with the MN cannot be performed at all. Specific communication can be refused without the communication route between the HA and the MN being affected by these flows.

Even when the MN performs communication using a plurality of different home addresses managed by a same HA, the DU message transmission judging unit 2205 can request that the HA transmit the DU message to a specific flow or CN, thereby requesting that the specific flow or CN switch the HoA, or thereby refusing communication.

For example, the external network 104 is a network that can use both mobile IP and PMIP. Among the home addresses held by the MN, the HoA 1 is an address managed by mobile IP. The HoA 2 is an address managed by proxy mobile IPv6 (PMIP: network-based mobility control protocol).

Moreover, these addresses are managed by the HA 1 that simultaneously provides functions of the HA in mobile IP and a local mobility anchor (LMA) in PMIP. In other words, the MN uses the HoA 1 when using mobile IP and uses the HoA 2 when using PMIP. Under circumstances such as this, when the MN connects to the external network 104, the DU message transmission judging unit 2205 judges whether to use mobile IP or PMIP.

Then, when mobile IP is judged to be used, the DU message transmission judging unit 2205 judges that a request should be made to the CN using the HoA 2 as the destination address to switch the HoA. Then, the DU message transmission judging unit 2205 instructs the flow information registration message generating unit 2203 to generate a message (flow information registration message) requesting that the HA 1 transmit the DU message when the HA 1 receives a packet using the HoA 2 as the destination address as proxy.

On the other hand, when PMIP is judged to be used, the HA 1 is requested to transmit the DU message when the HA 1 receives a packet using the HoA 1 as the destination address as proxy. In this case, the flow information registration message includes information (HoA) used to identify the protocol that is not being used. The HA 1 can be notified of information used to identify the protocol to be used (PMIP or mobile IP) to indicated that a request is being made for the HA 1 to transmit the DU message regarding the HoA of the protocol not being used. When the MN simultaneously uses mobile IP and PMIP, the MN can request that the DU message be transmitted to a specific flow or CN.

Even when the MN has a plurality of interfaces, and each interface communicates using a different home address managed by a different HA, the DU message transmission judging unit 2205 requests that the HA transmit the DU message to a specific flow or CN. The DU message transmission judging unit 2205 can request that the specific flow or CN switch the HoA or can refuse communication.

In this case, the MN takes into consideration a state of load placed on each interface, communication speeds, charges, security states, roaming relationships, and the like, and judges whether the HoA should be switched or communication should be refused. At this time, when the CN switches the destination address (the HoA to be used), the interface of the MN receiving the packet is switched. The interface of the MN in this case can be connected to an external network.

Even when the MN has a plurality of interfaces, and each interface communicates using a different home address managed by the same HA, in a manner similar to that described above, the DU message transmission judging unit 2205 can request that the HA transmit the DU message to a specific flow or CN.

For example, when one interface of the MN is connected to an ordinary external network and uses mobile IP, another interface is connected to a network providing PMIP (Proxy Mobile IPv6: network-based mobility control protocol) and uses PMIP, and functions of the HA in mobile IP and the local mobility anchor (LMA) in PMIP are provided by a same node, the MN takes into consideration which between PMIP and mobile IP to use, and judges whether to switch the HoA or refuse communication.

When the DU message transmission judging unit 2205 receives the response message in response to the transmitted flow information registration message and confirms that the flow information has been registered, the DU message transmission judging unit 2205 instructs the registered flow information storaging unit 2207 to hold the registered information. The flow information registration message generated by the flow information registration message generating unit 2203 is similar to those shown in Fig. 3 and Fig. 4.

As described above, according to the fourth embodiment of the present invention, the MN can request that the HA transmit the DU message to a specific CN or a specific flow, while maintaining a transfer request to a CoA from a HA. As a result, the CN receiving the DU message can be more quickly notified that the address used is an address by which the MN cannot be reached and can be prompted to change the destination address. As a result of each HA being requested to transmit the DU message to the specific CN regarding each of a plurality of HoA, communication with the CN can be refused.

### <Fifth Embodiment>

A fifth embodiment of the present invention will be described. A network configuration according to the fifth embodiment of the present invention is similar to the network configuration according to the fourth embodiment shown in Fig. 21. Therefore, the fifth embodiment will be described with reference to Fig. 21 when required. First, a MN according to the fifth embodiment of the present invention will be described. A configuration of the MN according to the fifth embodiment of the present invention is similar to the configuration of the MN according to the fourth embodiment shown in Fig. 22. Therefore, units having the same name are described using the same reference number. The MN according to the fifth embodiment differs from the MN according to the fourth embodiment only regarding operations of the DU message transmission judging unit 2205 and the flow information registration message generating unit 2203. Respective operations will be described below.

The DU message transmission judging unit 2205 references information from the communication-via-HA 1 monitoring unit 2206 that monitors communication performed via the HA 1 using the HoA 1, and judges whether a DU message should be transmitted to the CN that has transmitted a packet designating the HoA 1 of the MN as the destination address. When the DU message transmission judging unit 2205 judges that the DU message should be transmitted, the DU message transmission judging unit 2205 instructs the flow information registration message generating unit 2203 to generate a flow information registration message requesting that a DU message be transmitted to the CN (flow identifying information). The DU message includes a New Code indicating use of route optimization. At this time, the DU message transmission judging unit 2205 gives a "New Code" indicating use of route optimization to the flow information registration message generating unit 2203 in addition to the identifying information of the subject flow.

The DU message transmitted from the HA to the CN includes the "New Code" indicating use of route optimization. As a reason for the judgment to be made that the DU message should be transmitted, a situation can be considered in which, when communication with the CN 1 via the HA 1 using the HoA 1 is performed, the quality of communication with the CN 1 is affected because the HoA 1 is used for communication with another node, and the like. In this case, in a communication to the HoA 1 started by the CN 2, for example, the CN 2 can be notified that the HoA 1 cannot be used or the CN 2 can be made to switch the destination without the communication with the CN 1 being affected, by a request being made to the HA 1 to transmit the DU message to give notification that the HoA 1 is unreachable or to make the CN 2 switch the destination to the HoA 2.

When the DU message transmission judging unit 2205 receives the response message in response to the transmitted flow information registration message and confirms that the flow information has been registered, the DU message transmission judging unit 2205 instructs the registered flow information storaging unit 2207 to hold the registered information. An example of a format of the flow information registration message generated by the flow information registration message generating unit 2203 is similar to those shown in Fig. 10 and Fig. 11. The format differs in that a value specified as the code is the "New Code" indicating use of route optimization.

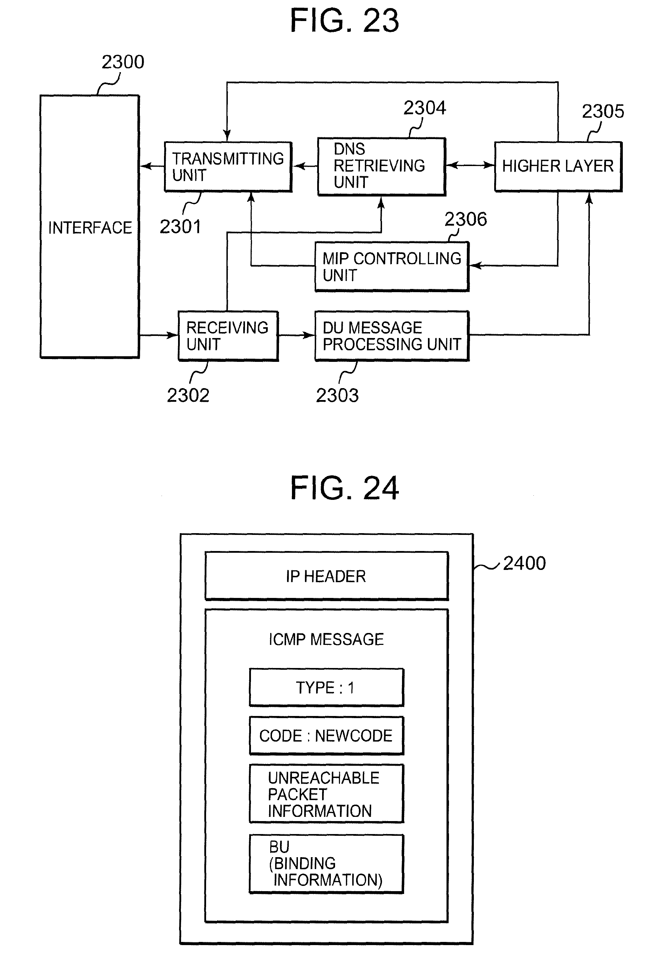

Next, a CN according to the fifth embodiment of the present invention will be described with reference to Fig. 23. The CN according to the fifth embodiment of the present invention differs from the CN according to the second embodiment shown in Fig. 15 in that an MIP controlling unit 2306 is added. The CN according to the fifth embodiment also differs from the CN according to the second embodiment regarding operations of a DU message processing unit 2303 and a higher layer 2305.

The DU message processing unit 2303 performs processing related to the DU message returned in response to the packet transmitted to the MN from the CN itself. The DU message processing unit 2303 gives information included in the message, such as the code indicating the reason the packet cannot reach the destination, to the MIP controlling unit 2306 or the higher layer 2305. When the DU message processing unit 2303 recognizes that the "New Code" indicating use of route optimization is included in the message, the DU message processing unit 2303 instructs the MIP controlling unit 2306 to transmit the packet using route optimization. The DU message processing unit 2303 can give information included in the DU message to the higher layer 2305. The DU message processing unit 2303 can also instruct a DNS retrieving unit 2304 to search for a new address of the MN.

The MIP controlling unit 2306 receives an instruction from the DU message processing unit 2303 or the higher layer 2305. When the MIP controlling unit 2306 judges that route optimization should be used to transmit the packet and holds binding information of the MN, the MIP controlling unit 2306 transmits the packet using the CoA included in the binding information. On the other hand, when the MIP controlling unit 2306 does not hold the binding information of the MN, the MIP controlling unit 2306 transmits a message (binding refresh request message) to the MN requesting registration of the binding message.

The higher layer 2305 indicates overall layers positioned in the upper level of the IP layers. The higher layer 1505 includes a transport layer (TCP/UDP) and applications above the transport layer (TCP/UDP). When the higher layer 2305 receives notification of the DU message from the DU message processing unit 2303, the higher layer 2305 identifies the packet that is unable to reach the destination indicated in the DU message, and furthermore, checks the code indicating the reason the packet cannot reach the destination. When the code is the "New Code" indicating use of route optimization, the higher layer 2305 instructs the MIP controlling unit 2306 to transmit the packet using route optimization. Instead of instructing the MIP controlling unit 2306 to transmit the packet using route optimization, the higher layer 2305 can give the host name of the MN that is the destination to the DNS retrieving unit 2304, and instruct the DNS retrieving unit 2304 to perform an address retrieval using DNS.

As described above, according to the fifth embodiment of the present invention, the MN can request that the HA transmit the DU message to a specific CN or a specific flow, while maintaining a transfer request to the CoA from the HA. Moreover, as a result of the "New Code" indicating use of route optimization being specified as the code indicating the reason for unreachability included in the DU message transmitted to the CN, the CN can immediately recognize that the action that should be taken is to change the destination address rather than retransmitting the packet, or that a request for registration of the binding information is required to be made.

### <Sixth Embodiment>

A sixth embodiment of the present invention will be described. A network configuration according to the sixth embodiment of the present invention is similar to the network configuration according to the fourth embodiment shown in Fig. 21. Therefore, the sixth embodiment will be described with reference to Fig. 21 when required. First, a MN according to the sixth embodiment of the present invention will be described. A configuration of the MN according to the sixth embodiment of the present invention is similar to the configuration of the MN according to the fourth embodiment shown in Fig. 22. Therefore, units having the same name are described using the same reference number. The MN according to the sixth embodiment differs from the MN according to the fourth embodiment only regarding operations of the DU message transmission judging unit 2205 and the flow information registration message generating unit 2203. Respective operations will be described below.

The DU message transmission judging unit 2205 references information from the communication-via-HA 1 monitoring unit 2206 that monitors communication performed via the HA 1 using the HoA 1, and judges whether a DU message should be transmitted to the CN that has sent a packet addressed the HoA 1 of the MN. When, as a result, the DU message transmission judging unit 2205 judges that the DU message should be transmitted, the DU message transmission judging unit 2205 instructs the flow information registration message generating unit 2203 to generate a flow information registration message requesting that a DU message be transmitted to the CN (flow identifying information). The DU message includes a code indicating use of route optimization and a binding update (BU) message.

At this time, the DU message transmission judging unit 2205 gives identifying information of the subject flow and the BU message of which notification is given to the CN to the flow information registration message generating unit 2203. The BU message is equivalent to a BU message ordinarily transmitted to the CN by the MN, and includes a CoA and the like. As a reason for the judgment to be made that the DU message should be transmitted, a situation can be considered in which, when communication with the CN 1 via the HA 1 using the HoA 1 is performed, the quality of communication with the CN 1 is affected because the HoA 1 is used for communication with another node, and the like.

In this case, in a communication to the HoA 1 started by the CN 2, for example, the CN 2 can be notified that the HoA 1 cannot be used or the CN 2 can be made to switch the destination without the communication with the CN 1 being affected, by a request being made to the HA 1 to transmit the DU message to give notification that the HoA 1 is unreachable or to make the CN 2 switch the destination to the HoA 2. When the DU message transmission judging unit 2205 receives the response message in response to the flow information registration message of which transmission has been instructed and confirms that the flow information has been registered, the DU message transmission judging unit 2205 instructs the registered flow information storaging unit 2207 to hold the registered information. Fig. 24 is an example of a format 2400 of the message generated by the ICMP DU message generating unit of the HA.

Next, a CN according to the sixth embodiment of the present invention will be described. A configuration of the CN according to the sixth embodiment of the present invention is similar to the configuration of the CN according to the fifth embodiment shown in Fig. 23. Therefore, units having the same name are described using the same reference number. The CN according to the sixth embodiment differs from the CN according to the fifth embodiment only regarding operations of the MIP controlling unit 2306, the DU message processing unit 2303, and the higher layer 2305. Respective operations will be described below.

The DU message processing unit 2303 performs processing related to the DU message returned in response to the packet transmitted to the MN from the CN itself. The DU message processing unit 2303 gives the code indicating the reason the packet cannot reach the destination, information included in the BU message, and the like included in the message to the MIP controlling unit 2306 or the higher layer 2305. When the DU message processing unit 2303 recognizes that the "New Code" indicating use of route optimization and the BU message are included in the message, the DU message processing unit 2303 instructs the MIP controlling unit 2306 to transmit the packet using route optimization using the CoA in the BU message. The DU message processing unit 2303 can give information included in the DU message to the higher layer 2305. The DU message processing unit 2303 can also instruct the DNS retrieving unit 2304 to search for a new address of the MN.

The higher layer 2305 indicates overall layers positioned in the upper level of the IP layers. The higher layer 1505 includes a transport layer (TCP/UDP) and applications above the transport layer (TCP/UDP). When the higher layer 2305 receives notification of the DU message from the DU message processing unit 2303, the higher layer 2305 identifies the packet that is unable to reach the destination indicated in the DU message, and furthermore, checks the code indicating the reason the packet cannot reach the destination. When the code is the "New Code" indicating use of route optimization, the higher layer 2305 instructs the MIP controlling unit 2306 to transmit the packet using route optimization. Instead of instructing the MIP controlling unit 2306 to transmit the packet using route optimization, the higher layer 2305 can give the host name of the MN that is the destination to the DNS retrieving unit 2304, and instruct the DNS retrieving unit 2304 to perform an address retrieval using DNS.

The MIP controlling unit 2306 receives an instruction from the DU message processing unit 2303 or the higher layer 2305. When the MIP controlling unit 2306 judges that route optimization should be used to transmit the packet, the MIP controlling unit 2306 transmits through route optimization, using the received binding information.

As described above, according to the sixth embodiment of the present invention, the MN can request that the HA transmit the DU message to a specific CN or a specific flow, while maintaining a transfer request to the CoA from the HA. Moreover, as a result of the "New Code" indicating use of route optimization being specified as the code indicating the reason for unreachability included in the DU message transmitted to the CN, and furthermore, the BU message being included, the CN can immediately recognize that the action that should be taken is to switch to a packet transfer using route optimization, rather than retransmitting the packet or the like.

The embodiments of the present invention are described above. Each functional block used in the explanations of each embodiment of the present embodiment, described above, can be realized as a large scale integration (LSI) that is typically an integrated circuit. Each functional block can be individually formed into a single chip. Alternatively, some or all of the functional blocks can be included and formed into a single chip. Although referred to here as the LSI, depending on differences in integration, the integrated circuit can be referred to as the integrated circuit (IC), a system LSI, a super LSI, or an ultra LSI. The method of forming the integrated circuit is not limited to LSI and can be actualized by a dedicated circuit or a general-purpose processor. A field programmable gate array (FPGA) that can be programmed after LSI manufacturing or a reconfigurable processor of which connections and settings of the circuit cells within the LSI can be reconfigured can be used. Furthermore, if a technology for forming the integrated circuit that can replace LSI is introduced as a result of the advancement of semiconductor technology or a different derivative technology, the integration of the functional blocks can naturally be performed using the technology. For example, the application of biotechnology is a possibility.

### INDUSTRIALAPPLICABILITY

The packet transfer control method, and the mobile terminal and the home agent used in the method of the present invention can transmit a DU message to a specific CN or a specific flow to prompt a change in destination, while maintaining a transfer request to a CoA from a HA. Therefore, the packet transfer control method, and the mobile terminal and home agent used in the method of the present invention can be advantageously used when a MN using mobile internet protocol (IP) communicates with a communication partner via a home agent.

## Claims

1. A packet transfer control method in a communication system in which a mobile terminal performs packet communication with a plurality of communication terminals that are communication partners of the mobile terminal, via a home agent of the mobile terminal, the packet transfer control method comprising a step of:
transmitting, by the mobile terminal, when the home agent receives a packet addressed to the mobile terminal from a predetermined communication terminal, a second message to the home agent, the second message including information required for the home agent to transmit a first message to the predetermined communication terminal, the first message stating that a currently used address addressed to the mobile terminal cannot be used; and
generating, by the home agent, the first message based on the information included in the second message, and transmitting the generated first message to the predetermined communication terminal.

2. The packet transfer control method according to claim 1, wherein:
when a plurality of home agents of the mobile terminal are present,
when a predetermined home agent receives the packet addressed to the mobile terminal from the predetermined communication terminal, the mobile terminal transmits a second message to the predetermined home agent, the second message including information required for the predetermined home agent to transmit a first message to the predetermined communication terminal, the first message stating that a currently used address addressed to the mobile terminal cannot be used; and
the predetermined home agent generates the first message based on the information included in the second message, and transmits the generated first message to the predetermined communication terminal.

3. The packet transfer control method according to claim 2, wherein:
the mobile terminal further includes, in the second message, information indicating an instruction to switch the currently used address addressed to the mobile terminal.

4. The packet transfer control method according to claim 2, wherein:
the mobile terminal further includes, in the second message, information on an address to which the currently used address addressed to the mobile terminal is switched.

5. The packet transfer control method according to claim 1, wherein:
the mobile terminal further includes, in the second message, information used to instruct performance of route optimization.

6. The packet transfer control method according to claim 5, wherein:
the mobile terminal further includes, in the second message, information used when route optimization is performed.

7. A mobile terminal used in a packet transfer control method in a communication system in which the mobile terminal performs packet communication with a plurality of communication terminals that are communication partners of the mobile terminal, via a home agent of the mobile terminal, the mobile terminal comprising:
a message generating means for generating a second message, when the home agent receives a packet addressed to the mobile terminal from a predetermined communication terminal, the second message including information required for the home agent to transmit a first message to the predetermined communication terminal, the first message stating that a currently used address addressed to the mobile terminal cannot be used; and
a transmitting means for transmitting the generated second message to the home agent.

8. The mobile terminal according to claim 7, wherein:
when a plurality of home agents of the mobile terminal are present,
when a predetermined home agent receives the packet addressed to the mobile terminal from the predetermined communication terminal, the message generating means generates a second message, the second message including information required for the predetermined home agent to transmit a first message to the predetermined communication terminal, the first message stating that a currently used address addressed to the mobile terminal cannot be used; and
the transmitting means transmits the generated second message to the predetermined home agent.

9. The mobile terminal according to claim 8, wherein the message generating means further includes, in the second message, information indicating an instruction to switch the currently used address addressed to the mobile terminal.

10. The mobile terminal according to claim 8, wherein the message generating means further includes, in the second message, information on an address to which the currently used address addressed to the mobile terminal is switched.

11. The mobile terminal according to claim 8, wherein the message generating means further includes, in the second message, information used to instruct performance of route optimization.

12. The mobile terminal according to claim 1, wherein the message generating means further includes, in the second message, information used when route optimization is performed.

13. A home agent used in a packet transfer control method in a communication system in which a mobile terminal performs packet communication with a plurality of communication terminals that are communication partners of the mobile terminal, via the home agent of the mobile terminal, the home agent comprising:
a receiving means for receiving a second message from the mobile terminal, when a packet addressed to the mobile terminal is received from a predetermined communication terminal, the second message including information required for the home agent to transmit a first message, the first message stating that a currently used address addressed to the mobile terminal cannot be used;
a message generating means for generating the first message based on the information included in the received second message; and
a transmitting means for transmitting the generated first message to the predetermined communication terminal.

14. The home agent according to claim 13, wherein:
when a plurality of home agents of the mobile terminal are present,
the second message further includes information indicating an instruction to switch the currently used address addressed to the mobile terminal.

15. The home agent according to claim 13, wherein
when a plurality of home agents of the mobile terminal are present,
the second message further includes information on an address to which the currently used address addressed to the mobile terminal is switched.

16. The home agent according to claim 13, wherein the second message further includes information for instructing performance of route optimization.

17. The home agent according to claim 16, wherein the second message further includes information used when route optimization is performed.
